# EUROPÄISCHE PATENTSCHRIFT

(11) **EP 0 944 444 B1**
(45) Veröffentlichungstag und Bekanntmachung des Hinweises auf die Patenterteilung: **28.05.2008**
(21) Anmeldenummer: 97911230.7
(22) Anmeldetag: 17.10.1997
(51) Int. Cl.: B21C 37/12

(54) **EINRICHTUNG ZUM FORMEN EINES SPIRALROHRES**
ARRANGEMENT FOR SHAPING A HELICAL PIPE
SYSTEME POUR FORMER UN TUYAU EN FORME D'HELICE

(30) Priorität: 21.10.1996 DE 19643500
(43) Veröffentlichungstag der Anmeldung: 29.09.1999
(73) Patentinhaber: Mann + Hummel GmbH, 71638 Ludwigsburg (DE)
(72) Erfinder: GÖDELMANN, Gerd, D-67366 Weingarten (DE); WINTER, Hans-Michael, D-67373 Dudenhofen (DE); STAUDENMAYER, Bernhard, D-67373 Dudenhofen (DE); KELLER, Lothar, D-70176 Stuttgart (DE)
(74) Vertreter: Voth, Gerhard
(86) Internationale Anmeldenummer: PCT/EP1997/005745
(87) Internationale Veröffentlichungsnummer: WO 1998/017412

(56) Entgegenhaltungen:
- EP-A- 0 206 201
- EP-A- 0 353 622
- EP-A- 0 384 625
- EP-A- 0 714 713
- DE-B- 1 071 638
- GB-A- 190 926 067
- US-A- 5 335 570

## Beschreibung

Die Erfindung betrifft eine Einrichtung zum Formen eines Spiralrohres nach dem Oberbegriff des Hauptanspruchs.

Aus der EP 0384625 ist eine Einrichtung bekannt bei welcher in einer ersten Prägestation ein Metallstreifen mit einem Bördelrand versehen wird. Dieser Metallstreifen wird anschließend in einem Formwerkzeug zu einer spiralförmigen Form gebogen und die aneinanderstoßenden Seitenränder verbördelt. Eine Trenneinrichtung schneidet nachfolgend das Spiralrohr in vorbestimmten Längen ab.

Solche Spiralrohre bestehen aus einem Lochblech undwerden z.B. in der Filtertechnik angewendet um ein zylinderförmiges Filterelement - beispielsweise ein zick-zack-förmig gefaltetes Filterpapier - mit einem inneren oder äußeren Stützrohr zu versehen. Dabei ist zu beachten, daß die Länge des Spiralrohres eine sehr geringe Toleranz aufweist, damit die Abstimmung mit den weiteren Elementen und die Anordnung von Endscheiben funktionsgerecht erfolgen kann. Es hat sich gezeigt, daß bei den bisher bekannten Einrichtungen die Länge und die Planebenheit des Spiralrohres sehr stark variierte, dies lag zum einen daran, daß dieses Maß während der Fertigung nur schwer zu ermitteln ist und zum anderen gewisse Unsauberkeiten aufgrund der zugeführten Bearbeitungsflüssigkeit zu Ungenauigkeiten geführt hat.

Aus der EP 0 206 201 A2 ist eine Einrichtung zum Wickeln von Metallrohren bekannt. Mit dieser Einrichtung ist es zwar möglich mit Metallrohren unbestimmter Länge herzustellen eine exakte Abstimmung der Rohrlänge ist jedoch nicht möglich.

Auch die EP 0 714 713 A1 beschreibt eine Einrichtung zum Herstellen eines Spiralrohres ohne auf die präzise Definition und Trennung von Teilstücken näher einzugehen.

Der Erfindung liegt die Aufgabe zugrunde, eine Einrichtung zum Formen eines Spiralrohres zu schaffen welche die genannten Nachteile vermeidet und ein Spiralrohr hoher Genauigkeit erzeugt.

Diese Aufgabe wird ausgehend von dem Oberbegriff des Hauptanspruchs durch dessen kennzeichnenden Merkmale gelöst.

Der Vorteil der Erfindung ist darin zu sehen, daß zur Erfassung der Länge des Spiralrohres eine Kombination einer Meßeinrichtung aus mechanischen und optoelektronischen Teilen bzw. aus mechanischen und elektronischen Teilen gebildet ist. Es hat sich nämlich gezeigt, daß allein die optoelektronische Erfassung durch Bearbeitungsflüssigkeit oder Metallspäne ihrem Meßergebnis verfälscht wird und deshalb die Spiralrohrlänge sehr stark variiert. Bei der Kombination mit einer mechanischen Tastung bzw. mit einer mechanischen Meßeinrichtung werden solche Fehler wirksam eliminiert, da ein unmittelbarer Kontakt zwischen der Meßeinrichtung und dem Spiralrohr zustande kommt.

In einer Ausgestaltung der Erfindung ist vorgesehen, die Meßeinrichtung fest auf dem Maschinentisch mit einem Schwenkeinschlag zu versehen. Dieser hat den Vorteil, daß bei einem Weitertransport des Spiralrohres der Anschlag ausweicht, andererseits aber unmittelbar bei Berührung ein entsprechendes Signal erzeugt.

Eine weitere Ausgestaltung der Erfindung sieht vor, mit einer ersten Meßeinrichtung bzw. mit einem ersten Meßsignal die Transportgeschwindigkeit des Metallstreifens bzw. des Spiralrohres zu verringern, so daß das Wirksamwerden der Trenneinrichtung bei geringerer Geschwindigkeit und damit höherer Genauigkeit der Einrichtung erfolgt.

Eine weitere Ausgestaltung der Erfindung ist darin zu sehen, daß die Meßeinrichtung längs verschiebbar auf einem Trägersystem angeordnet ist und ein elektromotorischer Antrieb die Meßeinrichtung entsprechende der zu fertigenden Spiralrohrlänge positioniert.

Zum Transport des Metallstreifens und damit zum Antrieb der gesamten Einrichtung, wird in vorteilhafter Weise ein hydraulischer Axialkolbenmotor angewendet, welcher mit einem Getriebe zur Drehzahlreduzierung ausgestattet ist. Außerdem ist eine Bremse vorgesehen, die eine exakte Postitionierung der Trenneinrichtung in Verbindung mit der Lage des Spiralrohres ermöglicht.

Um dem Spiralrohr beim Abschneiden eine gewisse Stabilität und Führung zu geben, ist im vorderen Bereich das Werkzeug länger ausgeführt.

Zum einfachen Austausch der Werkzeuge und Rohre, ist das Formwerkzeug und Trennrollenhalter gemäß einer vorteilhaften Ausgestaltung der Erfindung längs geteilt und kann aufgeklappt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispieles näher erläutert.

Es zeigt:
- Figur 1: eine Darstellung einer Einrichtung zum Formen eines Spiralrohres
- Figur 2: ein Formwerkzeug
- Figur 3: die Detaildarstellung eines Streckmetallstützkörpers
- Figur 4: die Schnittdarstellung eines Filterelements

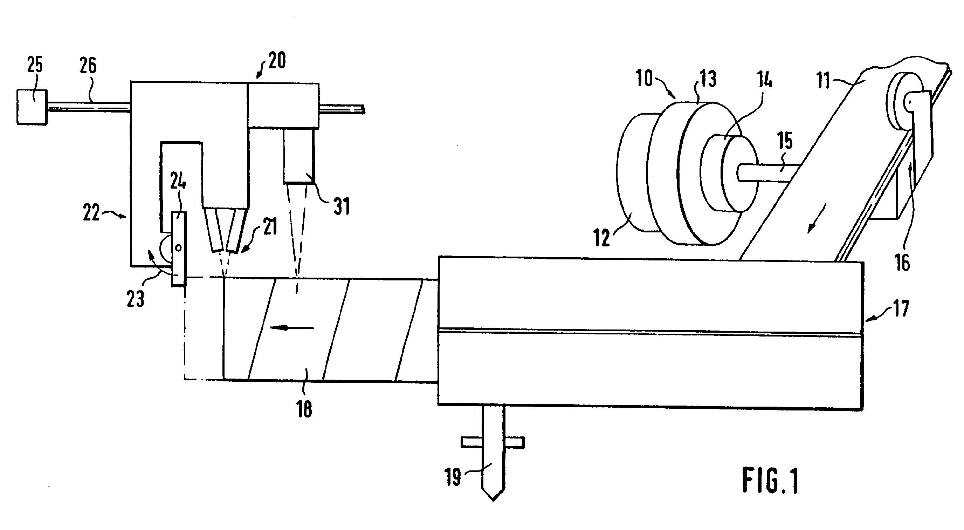

Figur 1 zeigt die schematische Darstellung, einer Einrichtung zum Formen eines Spiralrohres. Ein detailierter Aufbau einer solchen Einrichtung ist beispielsweise der EP 0384625 zu entnehmen. Weitere Hinweise enthält auch die EP 0206201 sowie die EP 0714713.

Die Einrichtung besteht aus einer Antriebseinheit (10) für einen Metallstreifen (11). Dieser Metallstreifen wird üblicherweise von einem Coil abgewickelt und der Antriebseinheit (10) zugeführt. Die Antriebseinheit besteht aus einem Axialkolbenmotor (12), einem Getriebe (13), einer Bremse (14) sowie einer Antriebswelle (15). In einer ersten Verfahrensstufe wird der Metallstreifen (11) mit einer Bördeleinrichtung (16) an zwei Seiten vorgebördelt. Nachfolgend wird der Metallstreifen einem Formwerkzeug (17) zugeführt. In diesem Formwerkzeug wird der Metallstreifen rohr-bzw.spiralförmig gebogen, sowie die Seitenkanten miteinander verbördelt. Das in dem Formwerkzeug (17) gefertigte Spiralrohr (18) wandert an der linken Seite nach außen und muß nachfolgend auf eine bestimmte Axiallänge zugeschnitten werden. Der Impuls für das Wirksamwerden der Trenneinrichtung (19) wird über die Meßeinrichtung (20) erzeugt. Diese Meßeinrichtung (20) besteht aus einem ersten Signalgeber (21) und einem zweiten Signalgeber (22). Sobald das Spiralrohr (18) in den Bereich des ersten Signalgebers (21) gelangt, wird über ein entsprechendes Signal die Drehzahl des Axialmotors (12) reduziert.

Ein weiterer Signalgeber (31) ist an der Meßeinrichtung (20) angeordnet, dieser sorgt dafür daß die Meßeinrichtung über den ersten Signalgeber (21) nicht zu tief eingestellt wird und evtl. durch das Spiralrohr (18) beschädigt wird.

Ist das Spiralrohr (18) gemäß der strichpunktierten Darstellung an dem zweiten Signalgeber (22) angelangt, so führt dieser durch das axiale Forbewegen des Spiralrohres (18) eine Schwenkbewegung gemäß dem Pfeil (23) aus. Ein Sensor erfaßt diese Schwenkbewegung und erzeugt bei einer Auslenkung um einen bestimmten Winkel ein Signal, welches die Trenneinrichtung (19) aktiviert. Diese schneidet entsprechend der voreingestellten Länge das Spiralrohr (18) ab. Da der Schwenkhelbel (24 ) mit dem Spiralrohr (18) in einen mechanischen Kontakt tritt, können Verunreinigungen an der Vorderkante des Spiralrohres das Meßergebnis nicht verfälschen. Außerdem läßt sich die Winkelbewegung bis zur Auslösung des Signals sehr präzise einstellen, so daß ein Spiralrohr mit einer höhen Längengenauigkeit geschaffen wird.

Sofern Spiralrohre mit variablen bzw. unterschiedlichen Längen gefertigt werden, kann die Meßeinrichtung (20) mit einem elektromotorischen Antrieb (25) und einer Spindel (26) längs verschoben werden. Auch diese Längsverschiebung ist mit hoher Genauigkeit durchführbar.

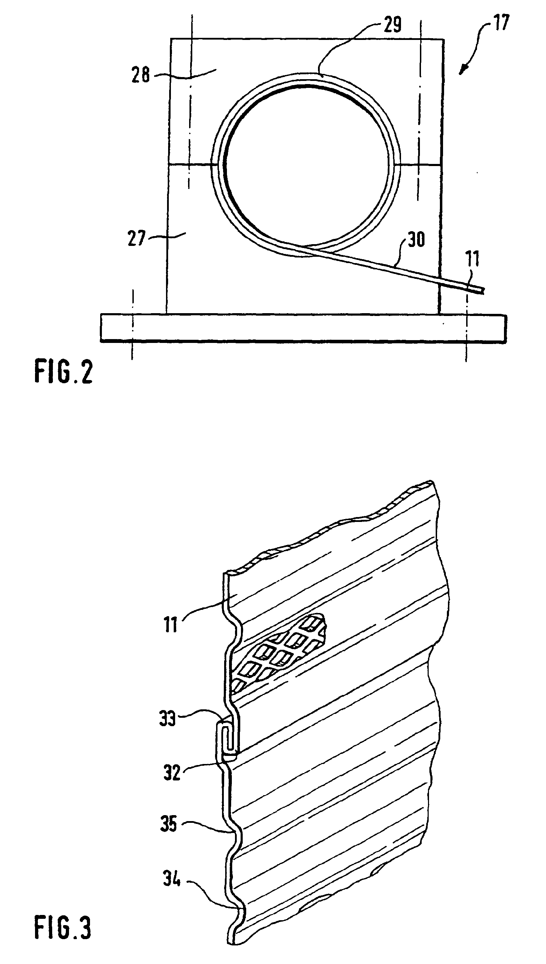

Figur 2 zeigt das Formwerkzeug (17) in Richtung seiner Längsachse, dieses Formwerkzeug (17) besteht aus einem Unterteil (27) und einem Oberteil (28) und kann damit sehr leicht geöffnet werden. Der Formraum ist mit einem Material, mit guten Gleiteigenschaften z.B. einem Bronzeblech (29) ausgekleidet. Die Gleiteigenschaften können durch Zuführung entsprechender Bearbeitungsflüssigkeit weiter verbessert werden. Der Metallstreifen (11) wird über eine Spaltöffnung (30) dem Werkzeug zugeführt, legt sich an die Innenwandung an und wird entsprechend verbördelt.

Die Möglichkeit, das Formwerkzeug zu öffnen, führt dazu, daß die Rüstzeti wesentlich verkürzt wird.

Der Metallstreifen, welcher in der Einrichtung zu einem Spiralrohr geformt wird, ist üblicherweise ein Lochblech. Der Nachteil bei einem Lochblech liegt darin, daß durch die Lochung ein erheblicher Materialanteil verloren geht. Wird dagegen ein Streckmetall als Metallstreifen benutzt, dann wird das eingesetzte Material hundertprozentig verwendet, es entsteht kein Restmaterial. Ein Spiralrohr aus Streckmetall hat außerdem den Vorteil, daß dieses Spiralrohr nur punktuell an dem Filterelement anliegt. Damit wird die wirksame Filterfläche durch den Stützkörper nur unwesentlich verringert.

Figur 3 zeigt den Ausschnitt aus einem mit Streckmetall geformten Spiralrohr. Dieses weist einen Außenfalz 32 und einen Innenfalz 33 auf, der die Verbindung des spiraligen Rohres bewerkstelligt. Das Streckmetall weist ferner Erhebungen 34, 35 auf, die durch das Stanzen und Strecken entstehen und auf denen sich das hier nicht dargestellte Filterelement abstützt.

Ein weiterer Vorteil des Streckmetallstützkörpers besteht darin, daß ein geringerer Strömungswiderstand bei gleicher Steifigkeit erzielbar ist. Außerdem sind die Herstellungskosten beim Streckmetallkörper gegenüber einem Lochblech wesentlich geringer.

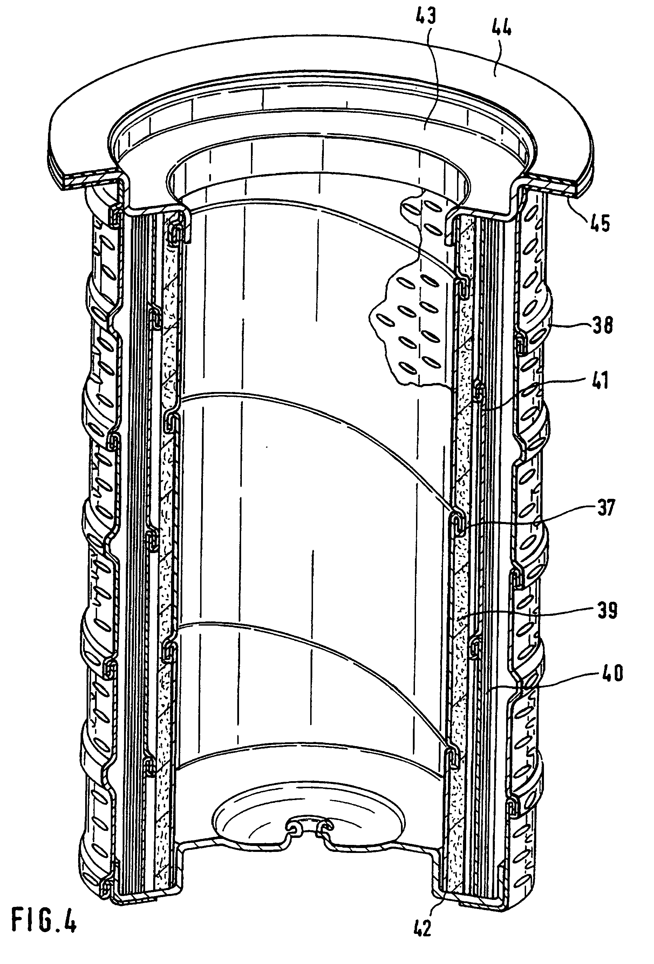

Figur 4 zeigt die Schnittdarstellung eines Filterelements, welches mit einem aus Streckmetall geformten Spiralrohr 37 versehen ist. Das Spiralrohr 37 dient als innerer Stützkörper, im Außenbereich kann ebenfalls ein Spiralrohr 38 vorgesehen sein. Zwischen diesen beiden Spiralrohren befindet sich ein erstes Filterelement 39, sowie ein zweites Filterelement 40. Die beiden Filterelemente sind mit einem Zwischenelement 41, welches ebenfalls ein Spiralfalzrohr sein kann voneinander getrennt. An den Stirnseiten des Filterelements befinden sich Endscheiben 42, 43, die Endscheibe 43 ist mit einer elastischen Dichtung 44, 45 versehen und bildet einen Einspannflansch.

## Patentansprüche

1. Einrichtung zum Formen eines Spiralrohres bei welcher wenigstens eine erste Prägestation zum Herstellen eines Bördelrandes an einem Metallstreifen vorgesehen ist, wobei nachfolgend ein Formwerkzeug angeordnet ist, welches aus dem Metallstreifen ein Spiralrohr erzeugt, sowie die Seitenränder verbördelt, wobei nachfolgend eine Trenneinrichtung vorgesehen ist welche das Spiralrohr in vorbestimmten Längen abtrennt, wobei zum Bestimmen der Länge des abzutrennenden Spiralrohres (18) eine Meßeinrichtung (20) vorgesehen ist welche eine mechanische Tastung des Spiralrohres (18) und eine optoelektronische Erfassung oder eine elektrische Erfassung des Spiralrohres (18) durchführt, **dadurch gekennzeichnet, dass** die Meßeinrichtung (20) einen Schwenkanschlag (24) aufweist, der in Kontakt mit der Vorderkante des Spiralrohres (18) gelangt und bei einer bestimmten Winkelauslenkung ein Signal zum Trennen des Spiralrohres erzeugt.

2. Einrichtung nach Anspruch 1, **dadurch gekennzeichnet, daß** bei einem ersten Signal der Meßeinrichtung (20), die Transportgeschwindigkeit des Metallstreifens (11) verringert wird und bei einem zweiten Signal die Trennrichtung (19) aktiviert wird.

3. Einrichtung nach einem der vorherigen Ansprüche, **dadurch gekennzeichnet, daß** die Meßeinrichtung (20) längs verschiebbar angeodnet ist und ein elektromotorischer Antrieb (25) vorgesehen ist, welcher die Meßeinrichtung (20) entsprechend der zu fertigenden Spiralrohrlänge positioniert.

4. Einrichtung nach einem der vorherigen Ansprüche, **dadurch gekennzeichnet, daß** zum Transport des Metallstreifens (11) ein hydraulischer Axialkolbenmotor (12) vorgesehen ist welcher mit einem Getriebe (13) zur Drehzahlreduzierung sowie einer Bremse (14) zur exakten Positionierung des Spiralrohres (18) ausgerüstet ist.

## Claims

1. Device for forming a helical pipe, the said device including at least one first stamping station for producing a flanged rim on a metal strip, wherein a forming tool is disposed downstream, the said forming tool creating a helical pipe out of the metal strip as well as crimping* the side edges, wherein a cutting device is disposed downstream, the said cutting device cutting the helical pipe into predetermined lengths, wherein to determine the length of the helical pipe (18) to be cut there is provided a measuring device (20), which senses the helical pipe (18) in a mechanical manner and detects the helical pipe (18) in an optoelectronic manner or an electrical manner, **characterised in that** the measuring device (20) includes a pivotal stop member (24), which comes into contact with the leading edge of the helical pipe (18) and at a certain angular deflection generates a signal for cutting the helical pipe.

2. Device according to claim 1, **characterised in that** at a first signal from the measuring device (20), the conveying speed of the metal strip (1) is reduced and at a second signal the cutting device (19) is activated.

3. Device according to one of the preceding claims, **characterised in that** the measuring device (20) is disposed so as to be longitudinally displaceable and a drive (25) that is driven by an electric motor is provided, the said drive positioning the measuring device (20) corresponding to the length of helical pipe to be produced.

4. Device according to one of the preceding claims, **characterised in that** a hydraulic axial piston motor (12) is provided for the conveying of the metal strip (11), the said motor being provided with a gear mechanism (13) for reducing the speed as well as with a brake (14) for positioning the helical pipe (18) in a precise manner.

## Revendications

1. Dispositif pour former un tube hélicoïdal, dans lequel on prévoit au moins une première station d'emboutissage pour fabriquer un bord roulé au niveau d'une bande métallique, avec en aval un outil de formage disposé ensuite, qui produit à partir de la bande métallique un tube hélicoïdal et roule les bords latéraux, un dispositif de découpe coupe ensuite le tube hélicoïdal en longueurs prédéterminées, un dispositif de mesure (20) étant prévu pour déterminer la longueur du tube hélicoïdal (18) à couper et pour effectuer un balayage mécanique du tube hélicoïdal (18) et optoélectronique ou une saisie électrique du tube hélicoïdal (18),
**caractérisé en ce que**
le dispositif de mesure (20) présente une butée pivotante (24) qui vient en contact avec l'arête avant du tube hélicoïdal (18) et pour une orientation angulaire donnée, génère un signal pour couper le tube hélicoïdal.

2. Dispositif selon la revendication 1,
**caractérisé en ce que**
sur un premier signal du dispositif de mesure (20), la vitesse de transport de la bande métallique (11) est réduite et sur un second signal, le dispositif de découpe (19) est activé.

3. Dispositif selon l'une des revendications précédentes,
**caractérisé en ce que**
le dispositif de mesure (20) est mobile longitudinalement et on prévoit un entraînement à moteur électrique (25) qui positionne le dispositif de mesure (20) en fonction de la longueur de tube hélicoïdal à fabriquer.

4. Dispositif selon l'une des revendications précédentes,
**caractérisé en ce que**
pour le transport de la bande métallique (11), on prévoit un moteur à pistons axiaux hydraulique (12) équipé d'une transmission (13) pour la réduction du régime ainsi que d'un frein (14) pour le positionnement exact du tube hélicoïdal (18).
